# EUROPEAN PATENT APPLICATION

(11) **EP 1 033 584 A2**
(43) Date of publication of application: **06.09.2000**
(21) Application number: 00301761.3
(22) Date of filing: 03.03.2000
(51) Int. Cl.: G01S 5/14

(54) **Navigational warning system for fishing vessels**

(30) Priority: 04.03.1999 GB 9905043
(71) Applicant: Amerada Hess Limited, London SW1X 7HY (GB); Enterprise Oil Exploration Limited, London WC2N 5EJ (GB); Esso Exploration and Production UK Limited, Surrey KT22 8UX (GB); Paladin Resources (Bittern) plc, London SW1Y 6DN (GB); Shell U.K. Limited, London SE1 7NA (GB); Veba Oil & Gas UK Limited, London SW1X 7LD (GB)
(72) Inventor: Riksen, Mark, Amerada Hess Limited, London SW1X 7HY (GB)
(74) Representative: Abrams, Michael John

(57) **Abstract**

A system for providing advanced warning of underwater navigation hazards to fishing vessels is disclosed, The system comprises: an absolute position tracking system, e.g. GPS or Differential G.P.S.; a microprocessor arranged to receive data from the position tracking system and from a database of underwater obstacles, the microprocessor being programmed: (a) to calculate the speed of the vessel and its Course Made Good (CMG); (b) to define a zone around the vessel which constitutes an "alarm template" for generating an alarm whenever an obstacle is predicted to be present within that zone; (c) to search the database for obstacles located within a selected range from the vessel's position; (d) to generate data for displaying the vessel's position, the alarm template zone and any obstacles predicted to be present within the area to be displayed; (e) to initiate an alarm if any of the obstacles are predicted to be present within the alarm template zone; and (f) to refresh the generated display data by updating the database search in response to the calculated speed and CMG of the vessel; and a display device adapted to receive data from said microprocessor and to generate a screen display showing the vessel's position, the alarm template zone and any obstacles predicted to be present within the area of the display from said data.

## Description

This invention relates to a navigational warning system for fishing vessels and, in particular, is concerned with improving safety during fishing operations.

Fishing vessels are at risk from numerous maritime hazards. Because their nets often extend beyond the limits of the vessel itself by as much as one or two kilometres, or even more, and because the nets can reach significant depths, fishing vessels are particularly at risk from submerged structures in deep waters. Examples of such structures are wellheads, manifolds, pipelines, suspended or abandoned wells, platforms and wrecks. The positions of such underwater obstacles may not be charted accurately or they may not be charted at all. Fishing nets can therefore catch on these structures relatively easily; this may lead, at best, to damage to the nets; and, at worst, to marine fatalities.

Numerous navigation systems have been proposed in the past and are described in the patent literature and elsewhere. For example, EP 0 619 501 A (Raytheon Company, published 12 October 1994) discloses a sonar system which is configured to generate a slope profile of the sea bed in front of a vessel; this is compared with a slope profile developed from stored charted data. If the sonar-generated slope profile is greater than the predicted value, the system recognises this as an anomaly and a hazard warning may then be initiated. The system, however, is applicable only to shallow waters (depths of 10-20 fathoms, i.e. 18-36 metres) are suggested); and it is not able to deal with fishing vessels, whose nets will generally extend to the rear and/or the side of the vessel for a considerable distance.

Another document, WO 93/04383 (J. Parra - published 4 March 1993), discloses an integrated passive acoustic and active ultrasonic system which is designed to detect the presence of fish and even identify the type of fish that are located. The system uses a position indicating arrangement such as GPS or LORAN together with a depth sounder and an aquatic animal finder and tracker system. Area map data is fed into the system and a display is produced showing the location of fish and of nearby land masses or islands and channel indicators (e.g. buoys). The objective of the invention disclosed in this document is to locate and identify fish; the document is not concerned with sea bed obstacles and how to avoid them and does not give any assistance as to how this might be achieved.

Many fishing vessels currently use a navigational system based on absolute positioning systems, e.g. GPS or differential GPS; positional data from this system is supplied via an industry standard cable connection (so-called NMEA link) to a video plotting (VP) device. The VP device is also supplied with area map data taken from charts such as those issued in the U.K. by the Admiralty. The end product is a video display indicating the vessel's position in relation to the characteristics identified in the area map. These characteristics rarely if ever include adequate data on sea bed structures such as wellheads, manifolds and pipelines. The VP device produces an electronic track of the sailed route; it is used to enable fisherman to return to successful grounds, where trawling has produced a significant catch of fish without encountering any subsea obstacles.

According to one aspect of the present invention, there is provided a system for providing advanced warning of underwater navigation hazards to fishing vessels, which system comprises:
A. an absolute position tracking system, e.g. GPS or Differential G.P.S.;
B. a microprocessor arranged to receive data from the position tracking system and from a database of underwater obstacles, and programmed:
   (a) to calculate the speed of the vessel and its Course Made Good (CMG);
   (b) to define a zone around the vessel which constitutes an "alarm template" for generating an alarm whenever an obstacle is predicted to be present within that zone;
   (c) to search the database for obstacles located within a selected range from the vessel's position;
   (d) to generate data for displaying the vessel's position, the alarm template zone and any obstacles predicted to be present within the area to be displayed;
   (e) to initiate an alarm if any of the obstacles are predicted to be present within the alarm template zone; and
   (f) to refresh the generated display data by updating the database search in response to the calculated speed and CMG of the vessel; and
C. a display device adapted to receive data from said microprocessor and to generate a screen display showing the vessel's position, the alarm template zone and any obstacles predicted to be present within the area of the display from said data.

Preferably, the alarm template zone is chosen to comprise a first, circular area; this may conveniently have a radius of one mile (1.6 km) centred on the vessel; and a second, sectorial area extending generally forwardly of the vessel in the direction of its CMG. This advantageously covers a radial distance of 3 miles (5km), the sector covering an angular range of ± 30 degrees from the CMG. This produces an alarm template zone whose shape resembles that of a thistle or a shuttlecock.

The screen display is preferably centred on the vessel; and may include an alphanumeric display as well as the map display. The alphanumeric display may, for example, show the vessel's speed and give a verbal warning if there is impending danger.

The alarm indication (when an obstacle is predicted to be present within the alarm zone template) can be an audible alarm, e.g. a buzzer, and/or a visible alarm, e.g. a flashing light or point on the display screen. For example, the warning may include LEDs which are illuminated progressively as the hazard is approached by the vessel.

A system in accordance with this invention can be used in a fishing vessel in conjunction with a video plotter; the data from the position tracking system is divided into two streams, one for the microprocessor in the system of the present invention, and the other for the video plotter. The signal splitter may be housed within the microprocessor.

Preferably, the database of underwater obstacles used in the system of the invention is the "Kingfisher" obstacle database, which is administered by the Sea Fishing Industry Authorities. The data held in "Kingfisher" includes pipelines, wellheads, manifolds, suspended/abandoned wells, and platforms; the data can be extended to include cables. Conveniently, the database is provided in the form of a data carrying card which is read by a reader linked to the microprocessor.

As well as providing a warning of underwater hazards, the system of the present invention can also give warn the vessel if it is approaching hostile waters or an area where fishing is excluded.

The invention will be illustrated by reference to the accompanying drawings, in which:
FIGURE 1 illustrates an embodiment of apparatus in accordance with this invention in which the microprocessor and screen display are housed in a single, portable unit; and
FIGURE 2 is a flow diagram illustrating the processing steps involved in practising the present invention.

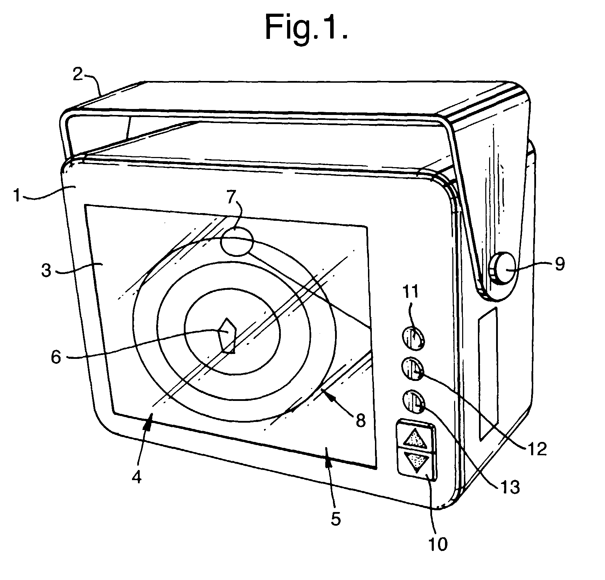

Referring to Fig. 1, the apparatus comprises housing 1 containing the microprocessor (not shown) and screen display unit 3. The unit is portable, having a handle 2 attached to the body of the unit 1 as at 9.

The screen displays the vessel 6 at the centre of the screen, with circles such as 8 representing increasing distance from the vessel. The display is arranged so that the vessel's Course Made Good (CMG) is always along a line vertically upwards from icon 6. An obstacle 7 is present within the area displayed; and alphanumeric display elements 4 and 5 give information, respectively, about the speed of the vessel and its present status - in this case, a warning message "Approaching obstruction" appears on screen.

The scale of the display may be adjusted by, for example, keys 10 if desired. Warning indicators 11, 12 and 13 become illuminated progressively should the vessel continue its course towards obstacle 7. An audible alarm may also be sounded by the unit.

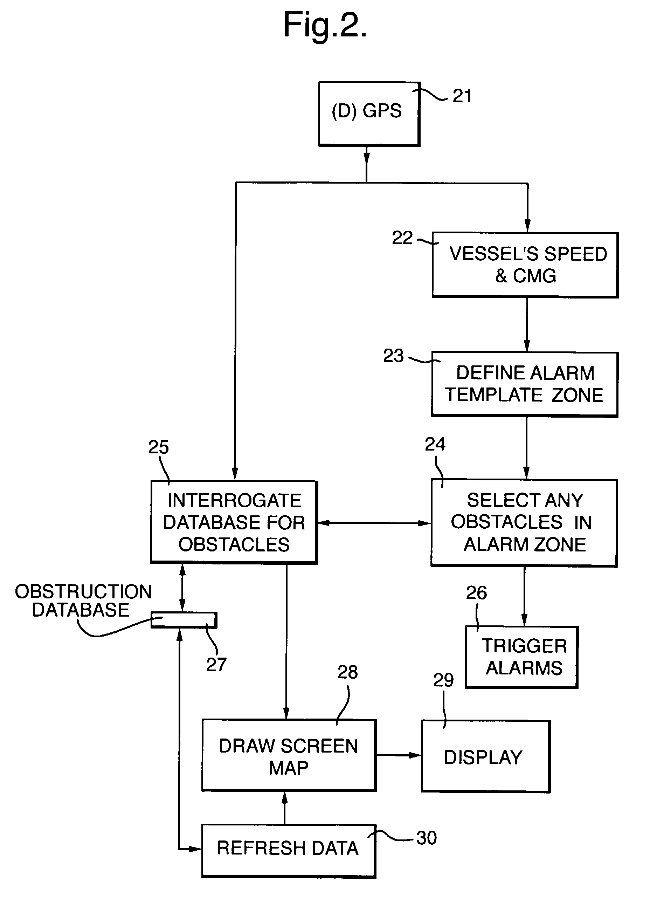

Referring next to Figure 2, a flow diagram illustrating the operation of the system is provided. Box 21 represents the GPS or Differential GPS system which is used to determine the vessel's speed and course made good (CMG - box 22). The microprocessor defines the limits of an alarm template zone (box 23); this is the zone within which the predicted presence of any obstacle will be used to generate an alarm. The microprocessor interrogates database 27 to find obstacles within a predetermined range of the vessel's current position (box 25). A subset of any such obstacles - namely those within the alarm template zone - is computed at box 24 and used to trigger one or more alarms (box 26). The microprocessor uses data determined from boxes 22, 23, 24 and 25 to draw a screen map (box 28) which data drives a display unit 29. The interrogation process is reiterated as necessary to refresh the data supplied to generate the screen map. Typically, the database search will be repeated when the vessel moves to within a predetermined distance of the limits of the area last computed.

## Claims

1. A system for providing advanced warning of underwater navigation hazards to fishing vessels, which system comprises:
A. an absolute position tracking system, e.g. GPS or Differential G.P.S.;
B. a microprocessor arranged to receive data from the position tracking system and from a database of underwater obstacles, and programmed:
(a) to calculate the speed of the vessel and its Course Made Good (CMG);
(b) to define a zone around the vessel which constitutes an "alarm template" for generating an alarm whenever an obstacle is predicted to be present within that zone;
(c) to search the database for obstacles located within a selected range from the vessel's position;
(d) to generate data for displaying the vessel's position, the alarm template zone and any obstacles predicted to be present within the area to be displayed;
(e) to initiate an alarm if any of the obstacles are predicted to be present within the alarm template zone; and
(f) to refresh the generated display data by updating the database search in response to the calculated speed and CMG of the vessel; and
C. a display device adapted to receive data from said microprocessor and to generate a screen display showing the vessel's position, the alarm template zone and any obstacles predicted to be present within the area of the display from said data.

2. A system as claimed in claim 1, wherein the alarm template zone is chosen to comprise a first, circular area centred on the vessel; and a second, sectorial area extending generally forwardly of the vessel in the direction of its Course Made Good (CMG).

3. A system as claimed in claim 2, wherein said second, sectorial area covers an angular range of ± 30 degrees from the CMG.

4. A system as claimed in claim 1, 2 or 3, wherein data from the database of obstacles is supplied to the microprocessor by means of a data card and a reader.

5. A system for providing advanced warning of underwater navigation hazards to fishing vessels, substantially as hereinbefore described with reference to and as illustrated in the accompanying drawings.
